# EUROPEAN PATENT APPLICATION

(11) **EP 3 002 739 A2**
(43) Date of publication of application: **06.04.2016**
(21) Application number: 15180215.4
(22) Date of filing: 07.08.2015
(51) Int. Cl.: G07G 1/00, G06K 9/03

(54) **INFORMATION PROCESSING APPARATUS AND INFORMATION PROCESSING METHOD BY THE SAME**

(30) Priority: 08.08.2014 JP 2014162855
(71) Applicant: Toshiba TEC Kabushiki Kaisha, Tokyo 141-0032 (JP)
(72) Inventor: IIZAKA, Hitoshi, Shinagawa-ku, Tokyo 141-0032 (JP); MIYAKOSHI, Hidehiko, Shinagawa-ku, Tokyo 141-0032 (JP); TSUNODA, Youji, Shinagawa-ku, Tokyo 141-0032 (JP); FUKUDA, Masatsugu, Shinagawa-ku, Tokyo 141-0032 (JP); NIMIYA, Shigeki, Shinagawa-ku, Tokyo 141-0032 (JP); SUGITA, Nobuhiro, Shinagawa-ku, Tokyo 141-0032 (JP); MIYAZAKI, Jun, Shinagawa-ku, Tokyo 141-0032 (JP)
(74) Representative: Takeuchi, Maya

(57) **Abstract**

An information processing apparatus comprises an image capturing module which captures an image of an object, a first recognition module which compares a feature amount of the object with a feature amount for collation of each merchandise registered in a dictionary to recognize merchandise to be a candidate of the object from each merchandise based on a similarity degree, an input module which receives an input selecting a merchandise corresponding to the object from the merchandise candidates, a second recognition module which detects a code symbol attached to the object from the image to recognize the merchandise corresponding to the object based on the code symbol, a control module which operates the first recognition module and the second recognition module in parallel, and a registration module which registers the merchandise for which the selecting input is received or the merchandise which is recognized by the second recognition module.

## Description

### FIELD

Embodiments described herein relate generally to an information processing apparatus and an information processing method by the information processing apparatus.

### BACKGROUND

In the related art, in a store such as a supermarket, a sales registration system of merchandise is used wherein a merchandise to which a code symbol such as a bar-code is attached is photographed and code information is extracted from the code symbol contained in the image data to register the sales of the merchandise identified based on the code information.

In recent years, there is a technology relating to a general object recognition (object recognition) in which a type and the like of an article is recognized (detected) according to a similarity degree obtained by comparing a feature amount of a target article extracted from image data captured by an image sensor device with a reference data (feature amount) in a dictionary prepared in advance. Furthermore, a sales registration system in which a merchandise such as fruits and vegetables is identified by using the technology of such a general object recognition is proposed. Furthermore, a system including both of a sales registration function with the code symbol described above and a sales registration function by the object recognition is also proposed.

However, there is a case in which a photo of related fruit, vegetable, and the like is printed on a package of the merchandise to which a code-symbol is attached. If the merchandise wrapped with the package is object-recognized, fruit or vegetable of the photo on the package is erroneously recognized as the merchandise and thus, there is a possibility that the merchandise erroneously recognized is sales-registered. In order to prevent that the merchandise erroneously recognized is sales-registered, an operator must switch the sales registration by the object recognition to the sales registration by the code symbol depending on a merchandise. However, such operation is troublesome and hinders efficiency of the processing by the operator.

### DESCRIPTION OF THE DRAWINGS

FIG. 1 is a perspective view illustrating an example of a checkout system according to an embodiment;
FIG. 2 is a block diagram illustrating a hardware configuration of a POS terminal and a merchandise reading apparatus;
FIG. 3 is a conceptual diagram illustrating a data configuration of a PLU file;
FIG. 4 is a block diagram illustrating a functional configuration of the POS terminal;
FIG. 5 is a flowchart illustrating a flow of a merchandise identification process;
FIG. 6 is an explanatory view illustrating an example of a merchandise registration screen on which an image recognition tag is selected;
FIG. 7 is an explanatory view illustrating an example of a merchandise registration screen on which tags are vertically arranged;
FIG. 8 is an explanatory view illustrating an example of a merchandise registration screen including a preset screen;
FIG. 9 is a flowchart illustrating a flow of a code-symbol recognition process;
FIG. 10 is an explanatory view illustrating an example of a merchandise registration screen on which a merchandise registered in a registered merchandise display region is displayed;
FIG. 11 is an explanatory view illustrating an example of an informing screen;
FIG. 12 is a flowchart illustrating a flow of an object recognition process;
FIG. 13 is an explanatory view illustrating an example of a merchandise registration screen on which merchandise candidate buttons are displayed in a merchandise candidate region;
FIG. 14 is an external perspective view illustrating a configuration of a self-POS terminal; and
FIG. 15 is a block diagram illustrating a hardware configuration of the self-POS terminal.

### DETAILED DESCRIPTION

According to an embodiment, there is provided an information processing apparatus including an image capturing module, a first recognition module, an input module, a second recognition module, a control module, and a registration module. The image capturing module captures an image of an object held over an image capturing section. The first recognition module compares a feature amount of the object captured by the image capturing module with a feature amount for collation of each merchandise registered in a dictionary in advance to recognize a merchandise to be a candidate of the object from each merchandise based on a similarity degree. The input module receives an input selecting a merchandise corresponding to the object from the merchandise candidates. The second recognition module detects a code symbol attached to the object from the image captured by the image capturing module to recognize the merchandise corresponding to the object based on the code symbol. The control module operates the first recognition module and the second recognition module in parallel. The registration module registers the merchandise for which the selecting input is received by the input module or the merchandise which is recognized by the second recognition module.

Preferably, the control module suppresses a processing of the first recognition module if the second recognition module recognizes the merchandise in the parallel processing.

Preferably, the apparatus further comprises: a display control module configured to display a screen including a first operation unit for performing a merchandise registration method with the first recognition module and the second recognition module, and a second operation unit for performing another merchandise registration method other than the merchandise registration method.

The control module may operate the first recognition module and the second recognition module in parallel if the first operation unit is operated.

Preferably, the registration module informs a registration of the merchandise if the merchandise recognized by the second recognition module is registered as the sales target.

Preferably, the display control module displays a merchandise list screen for selecting the merchandise therefrom if the second operation unit is operated and the registration module registers the merchandise selected through the merchandise list screen.

The present invention also relates to a program for causing a computer as the information processing apparatus.

The present invention also relates to an information processing method. The method includes: capturing an image of an object; first recognition step comprising comparing a feature amount of the object with a feature amount for collation of each merchandise registered in a dictionary in advance and recognizing merchandise to be a candidate of the object from each merchandise based on a similarity degree; receiving an input selecting the merchandise corresponding to the object from the merchandise candidates; second recognition step comprising detecting a code symbol attached to the object from the image captured and recognizing the merchandise corresponding to the object based on the code symbol;

performing the first recognition step and the second recognition step in parallel; and registering the merchandise for which the selecting input is received by the input module or the merchandise which is recognized at the second recognition step as a sales target.

Preferably, if merchandise is recognized at the second recognition step performed in parallel, the first recognition step is stopped.

Preferably, the method further comprises: display controlling step to display a screen including a first operation unit for performing a merchandise registration method at the first recognition step and the second recognition step, and a second operation unit for performing another merchandise registration method other than the merchandise registration method.

According to the invention, the first recognition step and the second recognition step are performed in parallel if the first operation unit is operated.

Preferably, the method further comprises:informing a registration of the merchandise if the merchandise recognized by the second recognition step is registered as the sales target.

Preferably, the display control step comprises displaying a merchandise list screen for selecting the merchandise therefrom if the second operation unit is operated and the merchandise selected through the merchandise list screen is registered.

Hereinafter, an information processing apparatus and an information processing method according to embodiments will be described with reference to the accompanying drawings as an example of a checkout system. The checkout system is a POS system including a POS terminal for performing registration and settlement of merchandise relating to one transaction. The embodiment is an application example of a checkout system introduced in a store such as a supermarket.

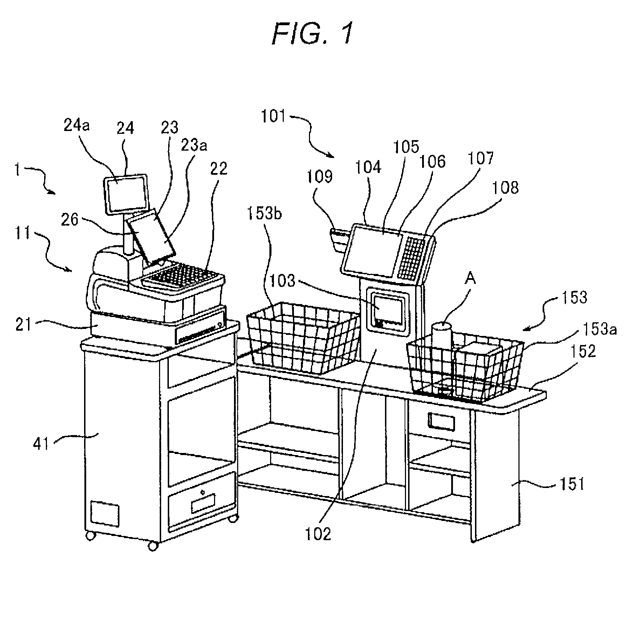

FIG. 1 is a perspective view illustrating an example of a checkout system 1 according to the embodiment. As illustrated in FIG. 1, the checkout system 1 includes merchandise reading apparatus 101 that reads information relating to merchandise and a POS terminal 11 that performs registration and settlement of a merchandise relating to one transaction. Hereinafter, an example in which the POS terminal 11 is applied to the information processing apparatus according to the present embodiment is described.

The POS terminal 11 is mounted on an upper surface of a drawer 21 on a checkout table 41. The drawer 21 receives control of an opening operation by the POS terminal 11. A keyboard 22 that is depressed by an operator (shop clerk) is arranged on an upper surface of the POS terminal 11. A first display device 23 for displaying information to the operator is provided on a rear side further than the keyboard 22 when viewed from the operator who operates the keyboard 22. The first display device 23 displays information on a display surface 23a. A touch panel 26 is laminated on the display surface 23a. A second display device 24 for displaying information to a customer is erected to be rotatable on a rear side further than the first display device 23. The second display device 24 displays information on a display surface 24a. Moreover, in the second display device 24 illustrated in FIG. 1, the display surface 24a is oriented toward a front side in FIG. 1, but the second display device 24 is rotated such that the display surface 24a is oriented toward the rear side in FIG. 1, and thus the second display device 24 displays information to the customer.

A laterally long table-shaped counter table 151 is disposed to form an L-shape with the checkout table 41 on which the POS terminal 11 is mounted. A receiving surface 152 is formed on an upper surface of the counter table 151. A shopping basket 153 for accommodating merchandise A is placed on the receiving surface 152. The shopping basket 153 includes a first shopping basket 153a carried by the customer and a second shopping basket 153b placed across the merchandise reading apparatus 101 from the first shopping basket 153a. Moreover, the shopping basket 153 is not limited to a so-called basket shape and may be a tray and the like. Furthermore, the shopping basket 153 (the second shopping basket 153b) is not limited to a so-called basket shape and may be a box shape, a bag shape, and the like.

The merchandise reading apparatus 101 connected to the POS terminal 11 to be capable of transmitting/ receiving data is provided on the receiving surface 152 of the counter table 151. The merchandise reading apparatus 101 includes a thin rectangular-shaped housing 102. A reading window 103 is arranged on a front surface of the housing 102. A display-operation section 104 is mounted on an upper portion of the housing 102. The display- operation section 104 is provided with a first display device 106 that is a display section where a touch panel 105 is laminated on a surface thereof. A keyboard 1 07 is disposed at the right side of the first display device 106. A card reading groove 108 of a card reader (not illustrated) is provided at the right side of the keyboard 107. A second display device 109 for supplying information to the customer is disposed at a left rear side of a rear surface of the display operation section 104 when viewed from the operator.

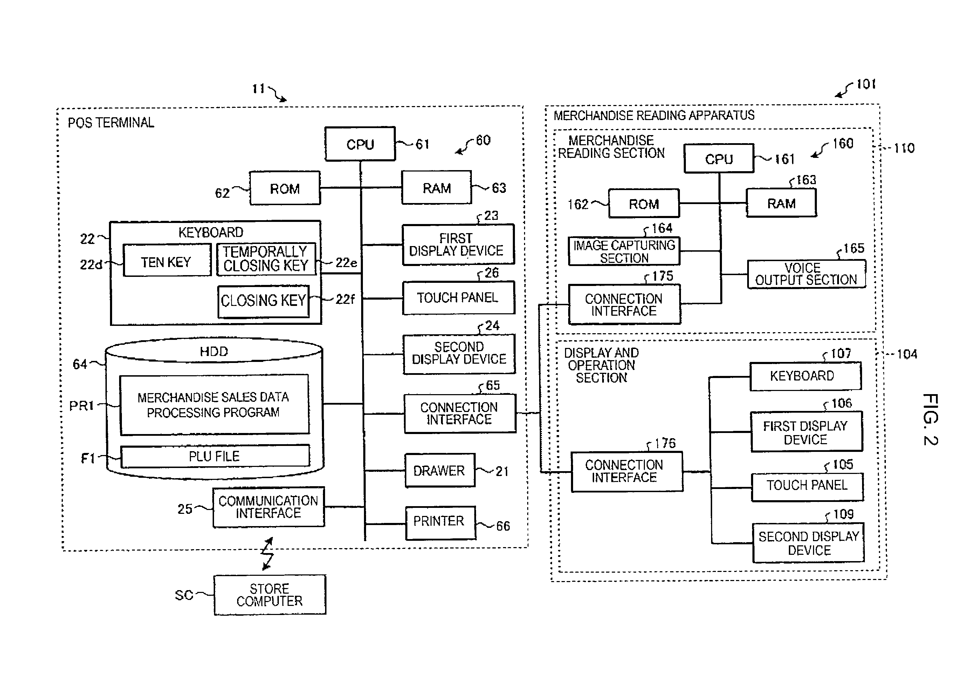

Such a merchandise reading apparatus 101 includes a merchandise reading section 110 ( refer to FIG. 2). In the merchandise reading section 110, an image capturing section 164 ( refer to FIG. 2) is arranged at the rear side of the reading window 103.

The merchandise A relating to one transaction is accommodated in the first shopping basket 153a carried by the customer. The merchandise A in the first shopping basket 153a is moved to the second shopping basket 153b by the operator who operates the merchandise reading apparatus 101. In this moving process, the merchandise A is directed toward the reading window 103 of the merchandise reading apparatus 101. At this moment, the image capturing section 164 (see FIG. 2) disposed within the reading window 103 photographs the merchandise A.

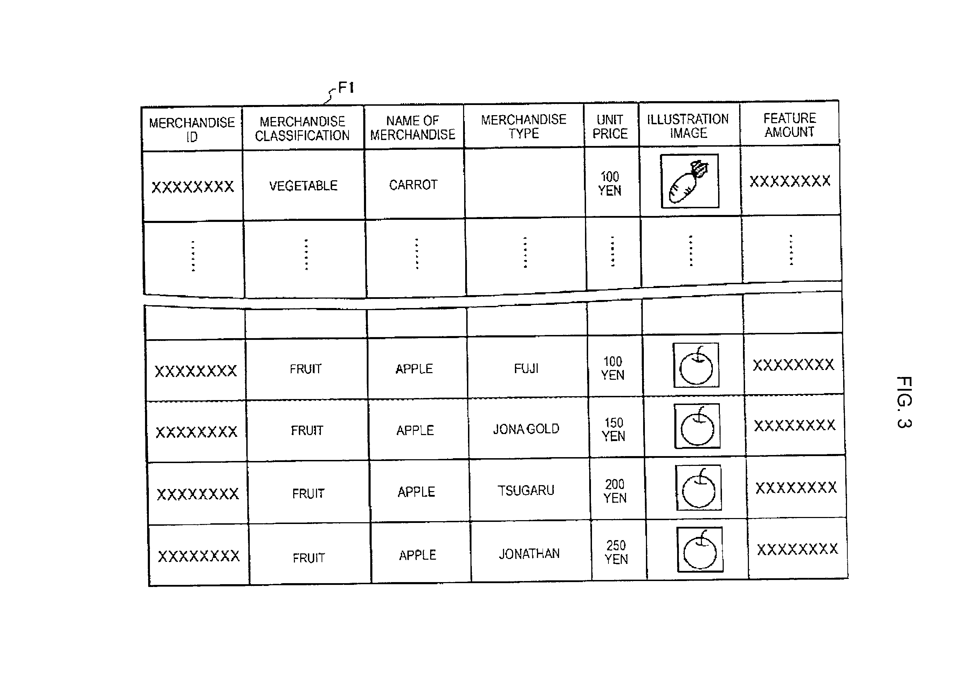

The merchandise reading apparatus 101 informs the POS terminal 11 of a merchandise ID of the merchandise to be sales-registered. Specifically, the merchandise reading apparatus 101 displays a screen, which is used to designate whether the merchandise A contained in the image that is captured by the image capturing section 164 corresponds to any one of merchandise registered in a PLU file F1 (see FIG. 3) described later, on the display-operation section 104. Then, the merchandise reading apparatus 101 informs the POS terminal 11 of the merchandise ID of the designated merchandise. In the POS terminal 11, information relating to sales registration such as a merchandise classification, a name of the merchandise, and a unit price of the merchandise corresponding to the merchandise ID is recorded on a sales master file (not illustrated) based on the merchandise ID informed from the merchandise reading apparatus 101 to carry out a sales registration.

FIG. 2 is a block diagram illustrating a hardware configuration of the POS terminal 11 and the merchandise reading apparatus 101. The POS terminal 11 includes a microcomputer 60 as an information processing section for performing information processing. The microcomputer 60 is configured such that a Central Processing Unit (CPU) 61 which controls each section for performing various calculation processes is connected to a Read Only Memory (ROM) 62 and a Random Access Memory (RAM) 63 through a bus.

All the drawer 21, the keyboard 22, the first display device 23, the touch panel 26, and the second display device 24 are connected to the CPU 61 of the POS terminal 11 through various input and output circuits (neither of which is illustrated). These are subject to control by the CPU 61.

The keyboard 22 includes a ten-key 22d the upper surface of which numerals such as "1", "2", "3" ... and an operator of multiplication called "x" are displayed, a temporally closing key 22e, and a closing key 22f.

A Hard Disk Drive (HDD) 64 is connected to the CPU 61 of the POS terminal 11. Programs or various files are stored in the HDD 64. All or a part of the programs or various files stored in the HDD 64 is developed or decompressed in the RAM 63 and is executed by the CPU 61 when starting the POS terminal 11. An example of the program stored in the HDD 64 is a merchandise sales data processing program PR1. An example of the file stored in the HDD 64 is the PLU file F1, distributed from a store computer SC, that is stored in the HDD 64. The HDD 64 may be a storage device or may be a storage device configured of another storage medium such as a Solid State Drive (SSD).

The PLU file F1 is a merchandise file that stores information relating to sales registration of the merchandise A for each item of the merchandise A that is displayed and sold in a store. In the following description, the PLU file F1 is used as a dictionary, but the dictionary may be a file different from the PLU file F1. The dictionary stores data (feature amount) for collation for a plurality of merchandise to identify the merchandise extracted from image data that is captured. If the dictionary is a file different from the PLU file F1, data (feature amount) for collation stored in the dictionary and information (identification information) of the PLU file F1 are tied with one another. The feature amount is obtained by parameterizing an appearance feature such as a standard shape, a surface hue, a pattern, and an uneveness or roughness of the surface of the merchandise.

FIG. 3 is a conceptual diagram illustrating a data configuration of the PLU file F1. As illustrated in FIG. 3, the PLU file F1 is used to store the merchandise ID, information relating to the merchandise, an illustration image, and the feature amount as merchandise information of the merchandise A for each merchandise. The merchandise ID is identification information capable of identifying the merchandise. The information relating to the merchandise includes the merchandise classification to which the merchandise A belongs, the name of the merchandise, a merchandise type, the unit price of the merchandise, and the like. The illustration image is an image indicating the merchandise A. The feature amount is information such as a hue, unevenness of the surface, and the like read from a merchandise image that is captured. In addition, the feature amount is data for collation used for determining a similarity degree described below. The PLU file F1 is configured to be read by the merchandise reading apparatus 101 through a connection interface 65 described below.

Referring back to FIG. 2, a communication interface 25 for executing data communication with the store computer SC through an input and output circuit (not illustrated) is connected to the CPU 61 of the POS terminal 11. The store computer SC is installed in a back office of the store. The PLU file F1 delivered to the POS terminal 11 is stored in a HDD (not illustrated) of the store computer SC.

Furthermore, the connection interface 65 capable of transmitting and receiving data to and from the merchandise reading apparatus 101 is connected to the CPU 61 of the POS terminal 11. The merchandise reading apparatus 101 is connected to the connection interface 65. A printer 66 performing print on a receipt and the like is connected to the CPU 61 of the POS terminal 11. The POS terminal 11 prints transaction contents of one transaction on a receipt through the printer 66 under control of the CPU 61.

The merchandise reading apparatus 101 also includes a microcomputer 160. The microcomputer 160 is configured such that a ROM 162 and a RAM 163 are connected to a CPU 161 by a bus. Programs executed by the CPU 161 are stored in the ROM 162. The image capturing section 164 and a voice output section 165 are connected to the CPU 161 through various input and output circuits (neither of which is not illustrated). Operations of the image capturing section 164 and the voice output section 165 are controlled by the CPU 161. The display-operation section 104 is connected to the merchandise reading section 110 and the POS terminal 11 through a connection interface 176. An operation of the display-operation section 104 is controlled by the CPU 161 of the merchandise reading section 110 and the CPU 61 of the POS terminal 11.

The image capturing section 164 has an image sensor (not illustrated) such as a color CCD image sensor or a color CMOS image sensor, and a light source (not illustrated) such as an LED, and performs image capturing through the inside of the reading window 103 under control of the CPU 161. For example, the image capturing section 164 performs capturing of an image of 30 fps (Frame Per Second). Frame images (captured images) which are sequentially captured by the image capturing section 164 at a predetermined frame rate are stored in the RAM 163.

The voice output section 165 includes a voice circuit, a speaker, and the like for generating an alarm sound and the like that are set in advance. The voice output section 165 performs informing with the alarm sound or a voice under the control of the CPU 161.

Furthermore, a connection interface 175 capable of transmitting and receiving data to and from the POS terminal 11 by connecting to the connection interface 65 of the POS terminal 11 is connected to the CPU 161. In addition, the CPU 161 performs transmitting and receiving data to and from the display-operation section 104 through the connection interface 175.

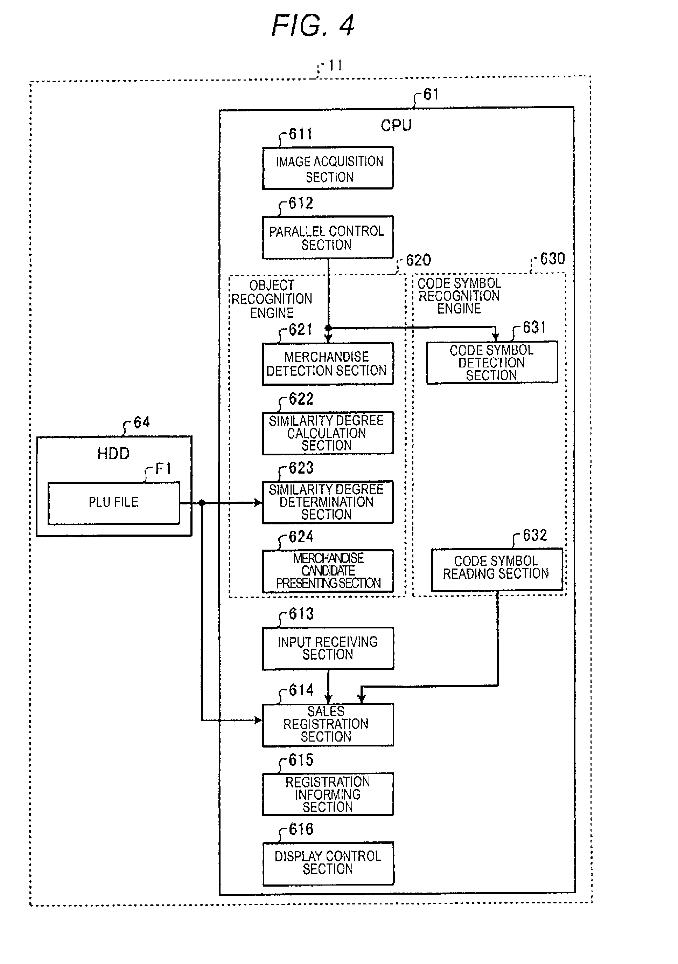

Next, a functional configuration of the CPU 61 realized by executing the program ( merchandise sales data processing program PR1) by the CPU 61 will be described. FIG. 4 is a block diagram illustrating the functional configuration of the POS terminal 11.

Fig. 4 is a block diagram illustrating the functional configuration of the POS terminal 11. As illustrated in FIG. 4, the CPU 61 of the POS terminal 11 executes the program stored in the ROM 62 or the HDD 64 to realize various functions. Specifically, the CPU 61 of the POS terminal 11 functions as an image acquisition section 611, a parallel control section 612, an object recognition engine 620, a code symbol recognition engine 630, an input receiving section 613, a sales registration section 614, a registration informing section 615, and a display control section 616. Here, the object recognition engine 620 that is a first recognition unit has a merchandise detection section 621, a similarity degree calculation section 622, a similarity degree determination section 623, and a merchandise candidate presenting section 624. Furthermore, the code symbol recognition engine 630 that is a second recognition unit has a code symbol detection section 631 and a code symbol reading section 632.

The image acquisition section 611 that is an image acquiring unit outputs an imaging-ON signal to the image capturing section 164 and makes the image capturing section 164 start an image capturing operation. The image acquisition section 611 sequentially acquires the frame images captured by the image capturing section 164 and are stored in the RAM 163 after the image capturing operation is started. Acquisition of the frame images by the image acquisition section 611 is performed in the order in which the frame images are stored in the RAM 163.

Meanwhile, if the merchandise A (object) is not positioned near a light source of the image capturing section 164, that is, near the reading window 103, brightness of a captured image by the image capturing section 164 is in an amount of 0 or close to 0. Then, light from the light source is reflected on the merchandise A (object) by approaching the merchandise A (object) desired to be recognized to the reading window 103 and thus the brightness of the captured image by the image capturing section 164 is changed to be bright.

The image acquisition section 611 detects such a brightness change (change in color attributes) and determines that the merchandise A (object) is in a state of facing the reading window 103 if the brightness is higher than a predetermined reference value. On the other hand, if the brightness is lower than the predetermined reference value, the image acquisition section 611 determines that the merchandise A (object) is in a state of not facing the reading window 103, that is, in a state of being out of frame.

Variation may occur in the captured images depending on an installation environment of the merchandise reading apparatus 101 in a state in which the merchandise A (object) does not exist. Thus, it is necessary to control and set the reference value of the brightness that operates the object recognition engine 620 such that the load of a CPU is not increased by an unnecessary object recognition processing by an influence due to unnecessary disturbance. As the color attributes, a saturation representing intensity of the color may be used other than the brightness representing the brightness of the color.

The parallel control section 612 that is a control unit controls a parallel process by the object recognition engine 620 and the code symbol recognition engine 630. More specifically, the parallel control section 612 informs that the image acquisition section 611 acquires the frame image to the RAM 163. Thus, the object recognition engine 620 and the code symbol recognition engine 630 start the parallel process. Then, the parallel control section 612 stops the code symbol recognition engine 630 if the object recognition engine 620 recognizes the merchandise A and performs the sales registration. Furthermore, the parallel control section 612 stops the object recognition engine 620 if the code symbol recognition engine 630 recognizes the merchandise A and performs the sales registration.

### (Object Recognition Engine)

A function relating to the object recognition engine 620 will be described. The merchandise detection section 621 reads the frame image stored in the RAM 163 if it is informed from the parallel control section 612 that the frame image is stored in the RAM 163.

Then, the merchandise detection section 621 detects all or a part of the merchandise A contained in the frame image acquired by the image acquisition section 611, using a pattern matching technique and the like. Specifically, an outline and the like are extracted from an image obtained by binarizing the acquired frame image. Next, merchandise directed to the reading window 103 for the sales registration is detected based on a difference between the outline extracted from a previous or last frame image and the outline extracted from a current or latest frame image, which is obtained by comparing the two outlines.

The previous frame image is, for example, a background frame image acquired by the image acquisition section 611 before the object recognition engine 620 is actuated. It is useful that the background frame image is automatically obtained as the previous frame image before the object recognition engine 620 is actuated in a case of an environment in which the background is not relatively much changed. For example, this is a case where the image capturing section 164 is mounted such that a reading direction of the image capturing section 164 coincides with a vertically downward direction to the receiving surface 152 of the counter table 151. Moreover, a state of illumination (illumination of ambient and the merchandise reading apparatus 101 itself), clothes of a user, and the like are included in the environment.

In addition, as the previous frame image, a background frame image acquired by the image acquisition section 611 immediately after a previous object recognition process is executed may be also used. Thus, it is useful in a case of the environment in which the background is relatively easily changed or in a case where clothes of the customer, a distance to the merchandise reading apparatus 101, and the like are expected to be changed in variety such as self-checkout operation.

Furthermore, the user may obtain the previous frame image as the background at any timing. As the case where the previous frame image is obtained as the background at any timing, various cases may be considered and, for example, it is useful for the case when the PLU file F1 serving as a dictionary is created.

Another method for detecting the merchandise is to detect presence or absence of a flesh-colored region from the acquired frame image. If the flesh-colored region is detected, in other words, the hand of the shop clerk is detected, the extraction of the outline of the merchandise which is supposed to be grasped by the hand of the clerk is tried by performing detection of the outline described above in the vicinity of the flesh-colored region. In this case, if an outline representing a shape of the hand and an outline of an object other than that in the vicinity of the outline of the hand are detected, the merchandise is detected from the outline of the object.

The similarity degree calculation section 622 extracts a state of the surface such as the hue, and the unevenness state of the surface of the merchandise A from all or a part of the frame image of the merchandise A captured by the image capturing section 164 as the feature amount. Moreover, the similarity degree calculation section 622 may not take into account the outline or the size of the merchandise A to shorten a processing time.

In addition, the similarity degree calculation section 622 calculates the similarity degree between the merchandise A and the merchandise registered in the PLU file F1 by comparing the feature amount of the merchandise A with the feature amount of each merchandise registered in the PLU file F1 (hereinafter referred to as a registered merchandise). Here, the similarity degree represents how much the image of all or a part of the merchandise A is similar to the image of each merchandise stored in the PLU file F1 if the merchandise image of each merchandise stored in the PLU file F1 is 100%="the similarity degree: 1.0". Moreover, for example, in the hue and the unevenness state of the surface, the similarity degree may be calculated with weighting which is varied.

As described above, recognizing the object contained in an image is called as a general object recognition. For such general object recognition, various recognition techniques are described in the following document. Keiji YANAI "Present and Future of Generic Object Recognition", Information Processing Society of Japan, Vol. 48, No. SIG16 [August 10, 2010 Search], Internet <URL:http://mm.cs.uec.ac.jp/IPSJ-TCVIM-Yanai.pdf>.

Furthermore, a technique performing generic object recognition by segmenting the image for each object is described in the following document. Jamie Shotton et al., "Semantic Texton Forests for Image Categorization and Segmentation", [August 10, 2010 Search], Internet <URL:http://citeseerx.ist.psu.edu/viewdoc/download?doi=10. 1.1.145.3036&rep=rep1&type=pdf>.

Moreover, a calculation method of the similarity degree between the captured image of the merchandise A and the merchandise image of the registered merchandise is not specifically limited. For example, the similarity degree between the captured image of the merchandise A and the registered merchandise may be calculated with an absolute evaluation or may be calculated with a relative evaluation.

If the similarity degree is calculated with the absolute evaluation, the similarity degree calculation section 622 compares the feature amount of the merchandise A and the feature amount of each registered merchandise in one-to-one manner and may adopt the derived similarity degree as it is. Furthermore, if the similarity degree is calculated with the relative evaluation, the similarity degree calculation section 622 may calculate the similarity degree such that sum of the similarity degree of each registered merchandise becomes 1.0 (100%). An example in which five (merchandise AA, AB, AC, AD, AE) are registered in the PLU file F1 is described. The similarity degree calculation section 622 calculates the similarity degree, with the captured merchandise A, of merchandise AA being 0.6, merchandise AB being 0.1, merchandise AC being 0.1, merchandise AD being 0.1, and merchandise AE being 0.1, such that a sum of the similarity degrees is 1.0.

The similarity degree determination section 623 recognizes the registered merchandise of which the similarity degree satisfies a predetermined threshold value as a candidate of the merchandise A (hereinafter referred to as a merchandise candidate) that is captured by the image capturing section 164 based on the similarity degree calculated by the similarity degree calculation section 622.

The merchandise candidate presenting section 624 displays information relating to the merchandise candidate recognized by the similarity degree determination section 623 on the first display device 106. More specifically, the merchandise candidate presenting section 624 reads an illustration image and a name of merchandise of the registered merchandise satisfying conditions from the PLU file F1. The merchandise candidate presenting section 624 sequentially outputs the candidates from a candidate having a high similarity degree (descending order) calculated by the similarity degree calculation section 622 to the first display device 106.

In addition, the merchandise candidate presenting section 624 may voice-output information that there are a plurality of candidates through the voice output section 165 according to the timing at which information relating to the merchandise candidates is displayed on the first display device 106. Furthermore, the merchandise candidate presenting section 624 may voice-output information by which distinction of vegetables or fruits can be easily determined through the voice output section 165.

The input receiving section 613 acting as an input unit receives various input operations corresponding to the display of the first display device 106 through the touch panel 105 or the keyboard 107. More specifically, the input receiving section 613 receives an input for selecting the merchandise corresponding to the merchandise A which is held over the image capturing section 164 from the merchandise candidates presented by the merchandise candidate presenting section 624.

### (Code Symbol Recognition Engine)

A function relating to the code symbol recognition engine 630 is described. The code symbol detection section 631 reads the frame image stored in the RAM 163 if it is informed from the parallel control section 612 that the frame image is stored in the RAM 163. Then, the code symbol detection section 631 detects the code symbol such as a bar-code or a two-dimensional code attached to the merchandise A as information relating to the merchandise from the frame image acquired by the image acquisition section 611.

The code symbol reading section 632 recognizes the merchandise by reading the merchandise ID from the code symbol detected by the code symbol detection section 631.

The sales registration section 614 acting as a registration unit performs the sales registration of the merchandise selected from the merchandise candidates recognized by the object recognition engine 620 or the merchandise recognized by the code symbol recognition engine 630 as the merchandise of the sales target. Specifically, the sales registration section 614 performs the sales registration by recording the merchandise ID of the merchandise, the merchandise classification, the name of the merchandise, the unit price corresponding to the merchandise ID, and the like on the sales master file together with the number of sales quantity, referring to the PLU file F1.

The registration informing section 615 serving as a registration unit informs of a case where the sales registration section 614 performs the merchandise registration. For example, the registration informing section 615 performs the informing by outputting a buzzer sound. Otherwise, for example, the registration informing section 615 performs the informing by displaying a screen, informing that the merchandise is registered, on the first display device 106.

The registration informing section 615 may perform the informing that the merchandise registration is performed with the code symbol if the merchandise is registered by the code symbol recognition engine 630. It is not necessary to perform an input operation by the operator (shop clerk) at the time of the merchandise registration by the code symbol recognition engine 630. Thus, the registration informing section 615 can prevent an operational error of the operator by informing that the merchandise is registered.

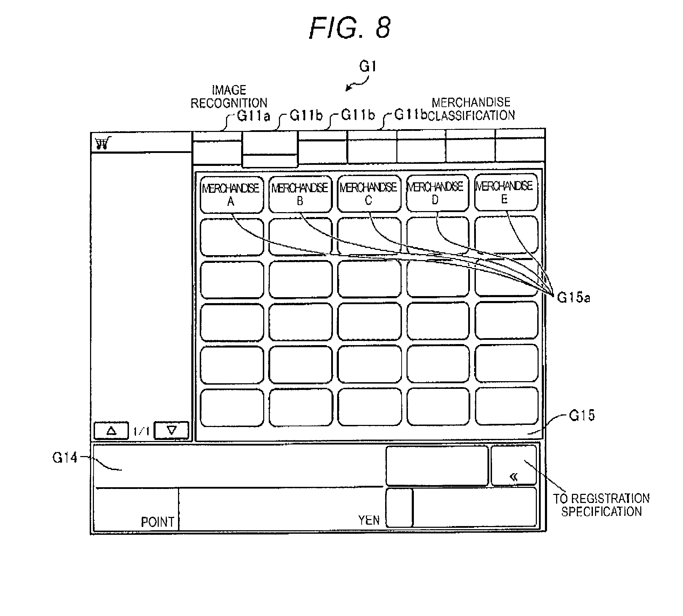

The display control section 616 acting as a display control unit controls the image displayed on the first display device 106 and the like. More specifically, the display control section 616 controls the display of an image recognition screen for the sales registration of the merchandise recognized by the object recognition engine 620 or the merchandise recognized by the code symbol recognition engine 630 as the sales target. In addition, the display control section 616 controls a display of a preset screen G15 (see FIG. 8) for the sales registration of the merchandise selected from a merchandise list screen as the merchandise of the sales target.

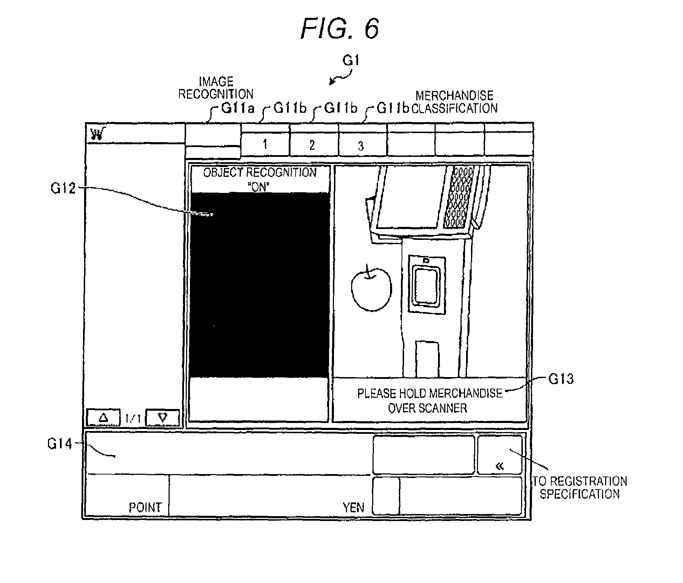

Furthermore, the display control section 616 displays both screens of the image recognition screen and the preset screen G15 (see FIG. 8) on the same object recognition screen G1 (see Fig. 6) by switching the screens in response to an operation of the operator. Thus, the operator can easily switch a mode in which the merchandise recognized by the object recognition engine 620 or the code symbol recognition engine 630 is sales-registered and a mode in which the merchandise selected from the merchandise list screen is sales-registered.

Next, a merchandise registration process is described which is executed by the CPU 61 of the POS terminal 11 according to the embodiment described above in accordance with the control program.

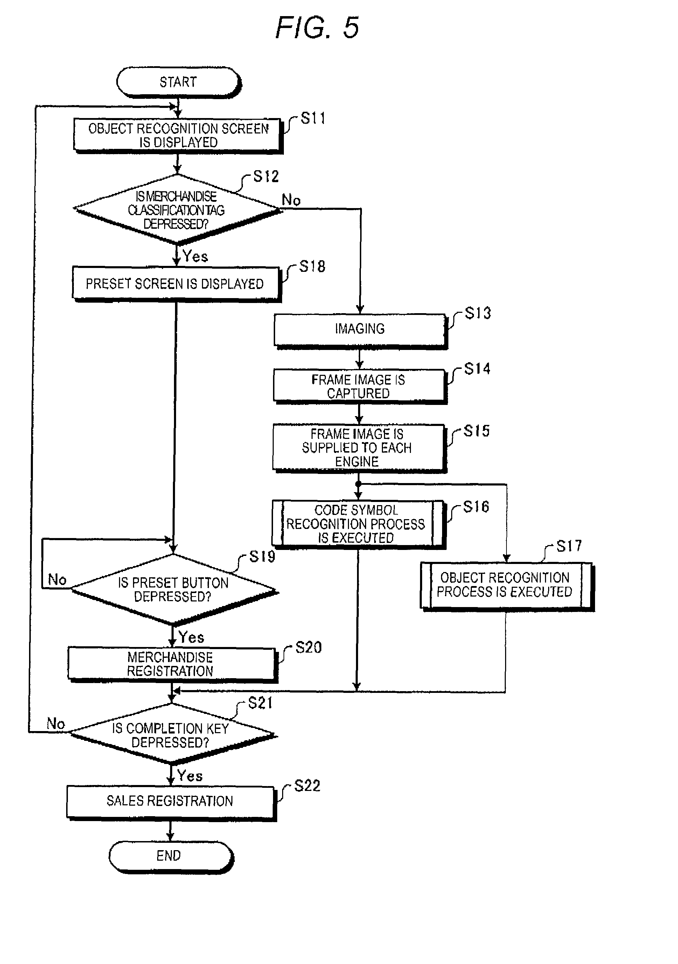

FIG. 5 is a flowchart illustrating a flow of the merchandise identification process executed by the CPU 61 of the POS terminal 11 in accordance with the control program.

First, the CPU 61 (display control section 616) of the POS terminal 11 displays the object recognition screen G1 in which image recognition is selected (Act S11).

Here, FIG. 6 is an explanatory view illustrating an example of the object recognition screen G1 in which the image recognition is selected. The object recognition screen G1 in which the image recognition is selected includes a plurality of tags G11a and G11b, an captured image display region G12, a message display region G13, and the registered merchandise display region G14.

The tags G11a and G11b are operation units for switching screens. The operator can select the merchandise registration method by switching screens, using the tags G11a and G11b. The tags G11a and G11b are roughly specified as the image recognition tag G11a and one or more merchandise classification tags G11b.

The image recognition tag G11a is depressed when the merchandise registration is performed using the object recognition engine 620 and the code symbol recognition engine 630. The merchandise classification tag G11b is provided for each item of merchandise classification and is depressed when the merchandise registration is performed from the merchandise list which is created in advance. For example, the merchandise classification includes fruits, vegetables, delicatessen, meat, fish, bakery, and the like.

The captured image display region G12 is used to display the image captured by the image capturing section 164. The operator can confirm a manner of holding the object by viewing the image displayed in the imaged image display region G12. The message display region G13 is used to display a message. The message display region G13 illustrated in FIG. 6 displays a message "please holding merchandise over scanner" and an illustration thereof. The registered merchandise display region G14 is used to display name of the merchandise that is registered, the number of registered merchandise, and a selling price. Moreover, the tags G11a and G11b illustrated in FIG. 6 are arranged in parallel in a horizontal direction, but arrangement locations of the tags G11a and G11b are not limited to the embodiment.

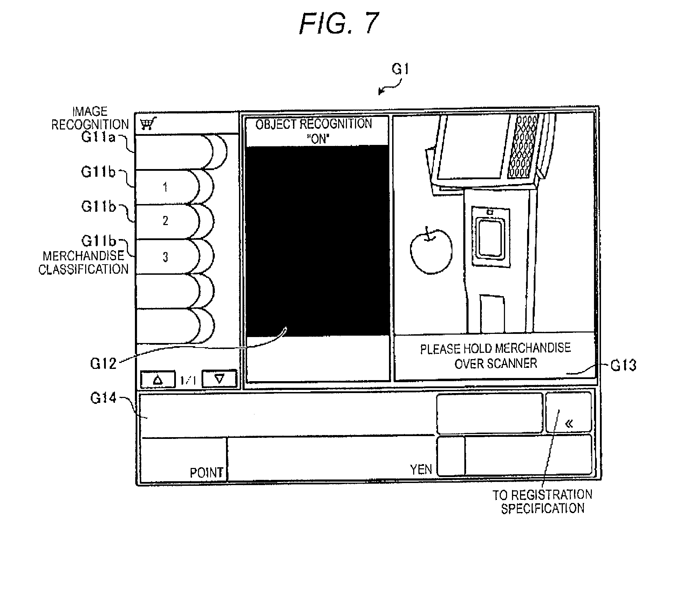

Here, FIG. 7 is an explanatory view illustrating an example of an object recognition screen G1 in which the tags G11a and G11b are vertically arranged. As illustrated in FIG. 7, the tags G11a and G11b may be arranged in parallel in the vertical and horizontal directions.

Returning to FIG. 5, the CPU 61 of the POS terminal 11 determines whether or not depressing of the merchandise classification tag G11b is detected (Act S12). If depressing of the merchandise classification tag G11b is not detected (Act S12; No), the CPU 61 (image acquisition section 611) of the POS terminal 11 outputs an imaging-ON signal to the image capturing section 164 to start the image capturing operation (Act S13). Next, the CPU 61 (image acquisition section 611) of the POS terminal 11 sequentially acquires the frame images that are stored in the RAM 163 after the merchandise A is captured by the image capturing section 164 (Act S14).

Next, the CPU 61 (parallel control section 612) of the POS terminal 11 supplies the frame images to the object recognition engine 620 and the code symbol recognition engine 630 (Act S15).

Thus, the CPU 61 of the POS terminal 11 executes the code symbol recognition process described below (Act S16). Simultaneously, the CPU 61 of the POS terminal 11 executes the object recognition process described below (Act S17). Thus, the CPU 61 of the POS terminal 11 executes the code symbol recognition process and the object recognition process in parallel.

On the other hand, if depressing of the merchandise classification tag G11b of the object recognition screen G1 is detected (Act S12; Yes), the CPU 61 (display control section 616) of the POS terminal 11 displays the object recognition screen G1 including the preset screen G15 for performing the merchandise registration from the merchandise list (Act S18).

Here, FIG. 8 is an explanatory view illustrating an example of the object recognition screen G1 including the preset screen G15. The preset screen G15 includes preset buttons G15a associated with the merchandise belonging to the classification of the merchandise classification tag G11b. The object recognition screen G1 illustrated in FIG. 8 shows a state where the merchandise classification tag G11b of a merchandise classification 1 is selected and the preset button G15a associated with the merchandise included in the merchandise classification 1 is displayed.

Next, the CPU 61 of the POS terminal 11 determines whether or not depressing of the preset button G15a is detected (Act 19). If depressing of the preset button G15a is not detected (Act 19; No), the CPU 61 of the POS terminal 11 is on standby.

On the other hand, if depressing of the preset button G15a is detected (Act 19; Yes), the CPU 61 of the POS terminal 11 registers the merchandise associated with the preset button G15a that is depressed as the merchandise of the sales target (Act 20).

Next, the CPU 61 of the POS terminal 11 determines whether or not depressing of the closing key 22f for ending the merchandise registration is detected (Act S21). If depressing of the closing key 22f is not detected (Act S21; No), the CPU 61 of the POS terminal 11 proceeds to Act S11.

On the other hand, if depressing of the closing key 22f is detected (Act S21; Yes), the CPU 61 (sales registration section 614) of the POS terminal 11 records the merchandise, that is registered in the sales master file, performs the sales registration. (Act S22).

Thus, the CPU 61 of the POS terminal 11 executes the merchandise registration process.

Next, the code symbol recognition process executed by the CPU 61 of the POS terminal 11 according to the embodiment described above in accordance with the control program is described.

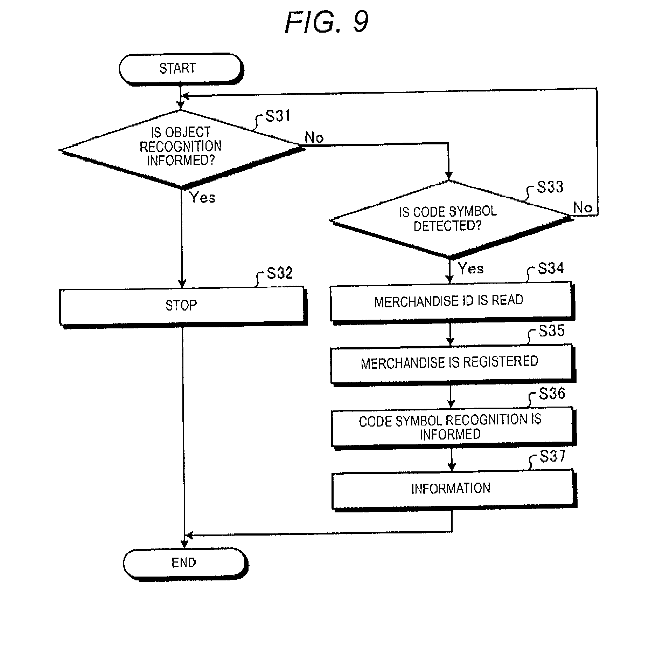

FIG. 9 is a flowchart illustrating a flow of the code symbol recognition process executed by the CPU 61 of the POS terminal 11 in accordance with the control program.

First, the CPU 61 of the POS terminal 11 determines whether or not a notice informing that the merchandise registration is performed by the object recognition engine 620 is received (Act S31).

If the notice is received (Act S31; Yes), the CPU 61 (parallel control section 612) of the POS terminal 11 stops the code symbol recognition process because the merchandise held over the image capturing section 164 is registered (Act S32). As described above, it is possible to prevent erroneous merchandise registration by suppressing the code symbol recognition engine 630. Then, the CPU 61 of the POS terminal 11 terminates a series of the code symbol recognition processing and returns to the merchandise registration process.

On the other hand, if the notice is not received (Act S31; No), the CPU 61 (code symbol detection section 631) of the POS terminal 11 determines whether or not the code symbol is detected from the frame image output from the parallel control section 612 (Act S33). If the code symbol is not detected (Act S33; No), the CPU 61 (code symbol detection section 631) of the POS terminal 11 proceeds to Act S31.

If the code symbol is detected (Act S33; Yes), the CPU 61 (code symbol reading section 632) of the POS terminal 11 reads the merchandise ID from the detected code symbol (Act S34) .

Next, the CPU 61 (sales registration section 614) of the POS terminal 11 registers the merchandise of the read merchandise ID as the merchandise of the sales target (Act S35) . Then, the CPU 61 of the POS terminal 11 transmits a notice informing that the merchandise registration is performed by the code symbol recognition engine 630 (Act S36).

Next, the CPU 61 (registration informing section 615) of the POS terminal 11 displays the merchandise registered in the registered merchandise display region G14 of the object recognition screen G1 (Act S37) to inform that the merchandise registration is executed and, terminates a series of the code symbol recognition processes. The CPU 61 then returns to the merchandise registration process.

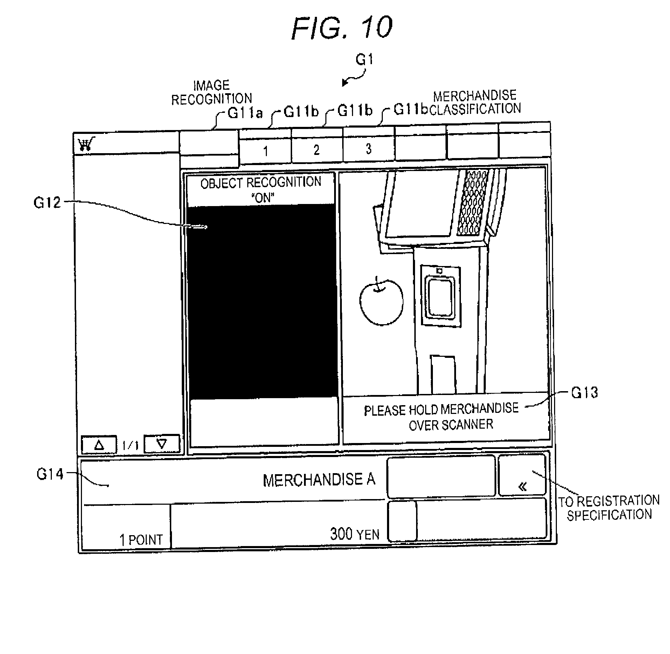

Here, FIG. 10 is an explanatory view illustrating an example of the object recognition screen G1 in which the registered merchandise in the registered merchandise display region G14 is displayed. The registered merchandise display region G14 illustrated in FIG. 10 shows that one merchandise A of which the selling price is 300 Yen is registered. The CPU 61 (registration informing section 615) of the POS terminal 11 may inform by voice when displaying the registered merchandise display region G14 illustrated in FIG. 10. Furthermore, the CPU 61 (registration informing section 615) of the POS terminal 11 may display an informing screen G2 for informing that registration is performed with the code symbol.

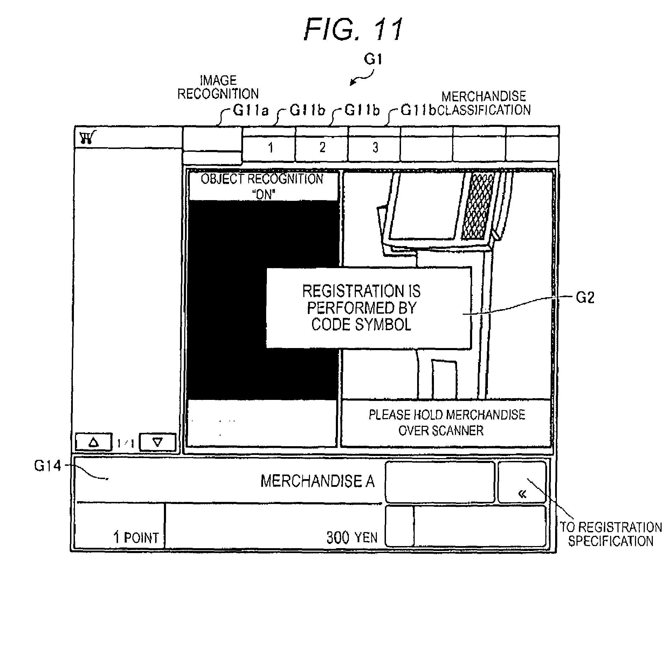

Here, FIG. 11 is an explanatory view illustrating an example of the informing screen G2. The informing screen G2 illustrated in FIG. 11 displays a message "registration is performed with code symbol" to inform the registration. Thus, erroneous operation by the operator can be reduced.

Thus, the CPU 61 of the POS terminal 11 executes the code symbol recognition processing.

Next, the object recognition processing is described which is executed by the CPU 61 of the POS terminal 11 according to the embodiment described above in accordance with the control program.

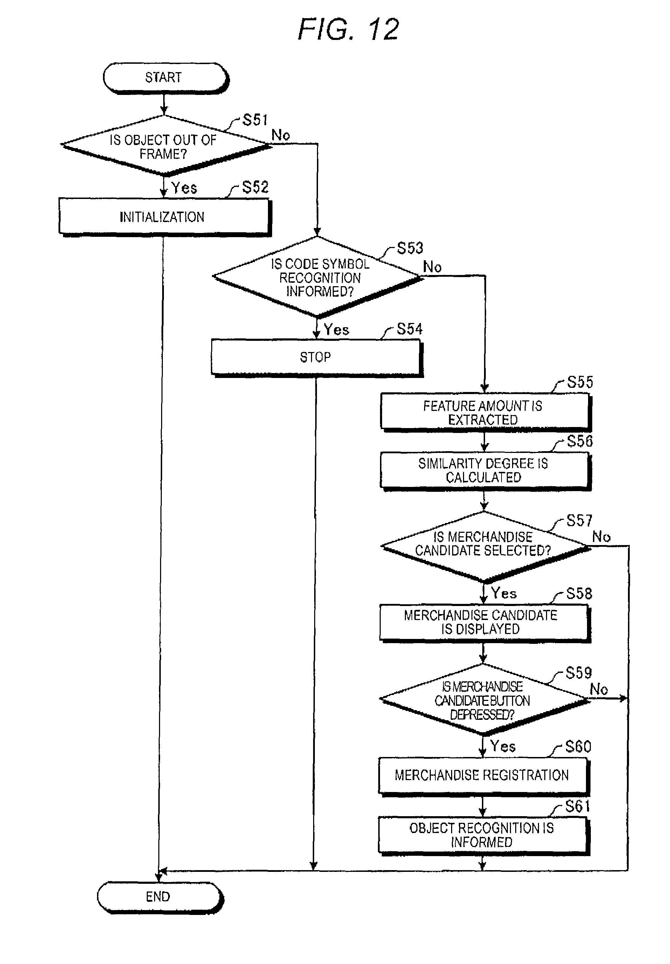

FIG. 12 is a flowchart illustrating a flow of the object recognition process executed by the CPU 61 of the POS terminal 11 in accordance with the control program.

First, the CPU 61 ( merchandise detection section 621) of the POS terminal 11 determines whether or not the object held over the image capturing section 164 is out of the frame (Act S51). If the object is out of the frame (Act S51; Yes), the CPU 61 of the POS terminal 11 initializes the object recognition engine 620 (Act S52).

On the other hand, if the object is not out of the frame (Act S51; No), the CPU 61 of the POS terminal 11 determines whether or not a notice informing that the merchandise registration is performed by the code symbol recognition engine 630 is received (Act S53).

If it is determined that the notice is received (Act S53; Yes), the CPU 61 (parallel control section 612) of the POS terminal 11 stops the object recognition engine 620 (Act S54) . As described above, it is possible to prevent erroneous merchandise registration by suppressing the object recognition engine 620. Then, the CPU 61 of the POS terminal 11 terminates a series of the object recognition processes and returns to the merchandise registration processing.

On the other hand, if the notice is not received (Act S53; No), the CPU 61 (similarity degree calculation section 622) of the POS terminal 11 extracts the feature amount of the object contained in the frame image (Act S55). Next, the CPU 61 (similarity degree calculation section 622) of the POS terminal 11 calculates the similarity degree of the object in the frame image (Act S56).

Then, the CPU 61 (similarity degree determination section 623) of the POS terminal 11 determines whether or not the merchandise candidate of which the calculated similarity degree is equal to or greater than a threshold value is selected (Act S57). If the merchandise candidate is not selected (Act S57; No), the CPU 61 of the POS terminal 11 terminates a series of the object recognition processes and returns to the merchandise registration processing.

On the other hand, if the merchandise candidate is selected (Act S57; Yes), the CPU 61 ( merchandise candidate presenting section 624) of the POS terminal 11 displays a merchandise candidate button G16a in a merchandise candidate region G16 (Act S58).

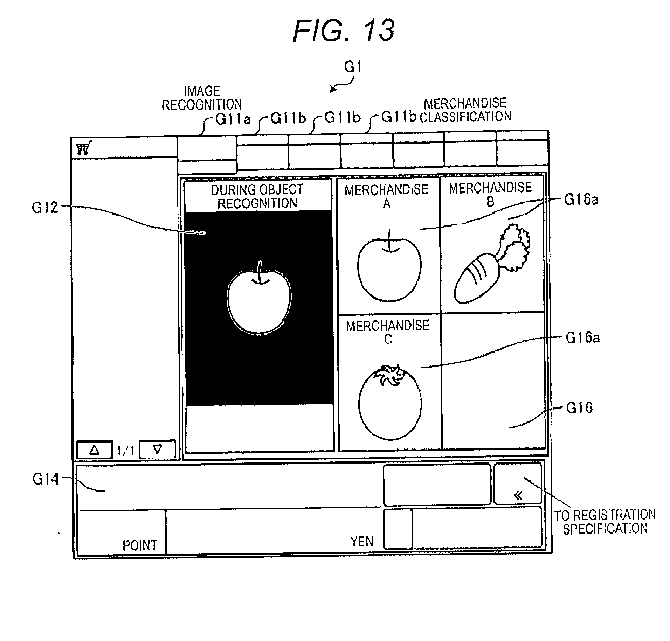

Here, FIG. 13 is an explanatory view illustrating an example of the object recognition screen G1 in which the merchandise candidate button G16a is displayed in the merchandise candidate region G16. The merchandise candidate region G16 is used to display the merchandise candidate button G16a. The merchandise candidate button G16a is depressed to register the merchandise (sales target), which is recognized as the merchandise candidate. The merchandise candidate region G16 illustrated in FIG. 13 shows a state where the merchandise candidate buttons G16a of the merchandise A, the merchandise B, and the merchandise C are respectively displayed. In the merchandise candidate region G16 illustrated in FIG. 13, three merchandise candidate buttons G16a are displayed, but the number of buttons is not limited to the embodiment.

Next, the CPU 61 of the POS terminal 11 determines whether or not depressing of the merchandise candidate button G16a is detected (Act S59). If it is determined that depressing of the merchandise candidate button G16a is not detected (Act S59; No), the CPU 61 of the POS terminal 11 terminates a series of the object recognition processes and returns to the merchandise registration processing.

On the other hand, if depressing of the merchandise candidate button G16a is detected (Act S59; Yes), the CPU 61 of the POS terminal 11 registers the merchandise corresponding to the merchandise candidate button G16a that is depressed as the merchandise of the sales target (Act S60). Next, the CPU 61 of the POS terminal 11 transmits the notice informing that the merchandise registration is performed by the object recognition engine 620 (Act S61).

Thus, the CPU 61 of the POS terminal 11 executes the object recognition processing.

As described above, according to the POS terminal 11 of the embodiment, the image acquisition section 611 acquires the merchandise A captured by the image capturing section 164 to store the image of the merchandise A in the RAM 63. The parallel control section 612 executes the object recognition engine 620 and the code symbol recognition engine 630 in parallel. The sales registration section 614 registers the selected merchandise A if the object recognition engine 620 recognizes the merchandise candidate or registers the recognized merchandise if the code symbol recognition engine 630 recognizes the merchandise. Thus, the POS terminal 11 of the embodiment can simultaneously use the sales registration function with the code symbol and the sales registration function with the general object recognition (object recognition).

Several embodiments of the invention are described, but the embodiments are presented as examples and are not intended to limit the scope of the invention. These novel embodiments described herein may be implemented in various other forms and various omissions, substitutions, and changes can be performed without departing from the scope of the invention. These embodiments and their modifications are within the scope or gist of the invention, and are included in the scope of its equivalents as set forth in the appended claims.

For example, in the embodiments described above, the POS terminal 11 includes the PLU file F1, but is not limited to the embodiments, and the merchandise reading apparatus 101 may include the PLU file F1. Otherwise, an external device which is accessible by the POS terminal 11 and the merchandise reading apparatus 101 may include the PLU file F1.

In addition, in the embodiments described above, the POS terminal 11 is applied as the information processing apparatus having the functions of the image acquisition section 611, the parallel control section 612, the object recognition engine 620, the code symbol recognition engine 630, the input receiving section 613, the sales registration section 614, the registration informing section 615, and the display control section 616. However, the POS terminal 11 is not limited to the embodiments. The merchandise reading apparatus 101 may be applied as the information processing apparatus, including the functions of the image acquisition section 611, the parallel control section 612, the object recognition engine 620, the code symbol recognition engine 630, the input receiving section 613, the sales registration section 614, the registration informing section 615, and the display control section 616, and outputting a calculation result or a determination result to the POS terminal 11. Furthermore, in the embodiment, the description is made as the collation data is the feature amount, but may be the captured merchandise image (reference image).

In addition, in the embodiments described above, as the checkout system 1, the checkout system 1 composed of the POS terminal 11 and the merchandise reading apparatus 101 is applied. However, the checkout system 1 is not limited to the embodiments. A single device including the functions of the POS terminal 11 and the merchandise reading apparatus 101 may be applied to. As a device including the functions of the POS terminal 11 and the merchandise reading apparatus 101, a self-checkout device (hereinafter, simply referred to as a self-POS) which is installed at a store such as supermarket is exemplified.

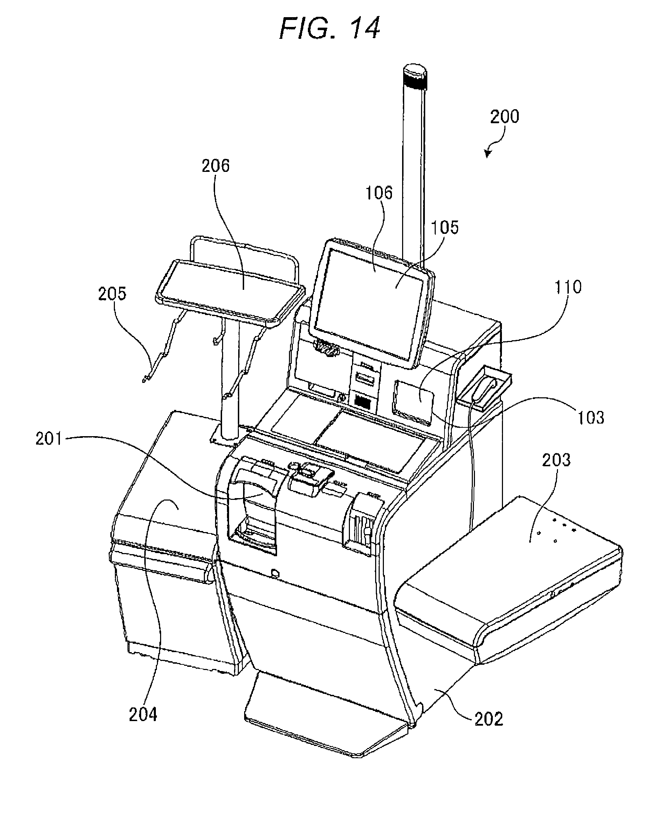

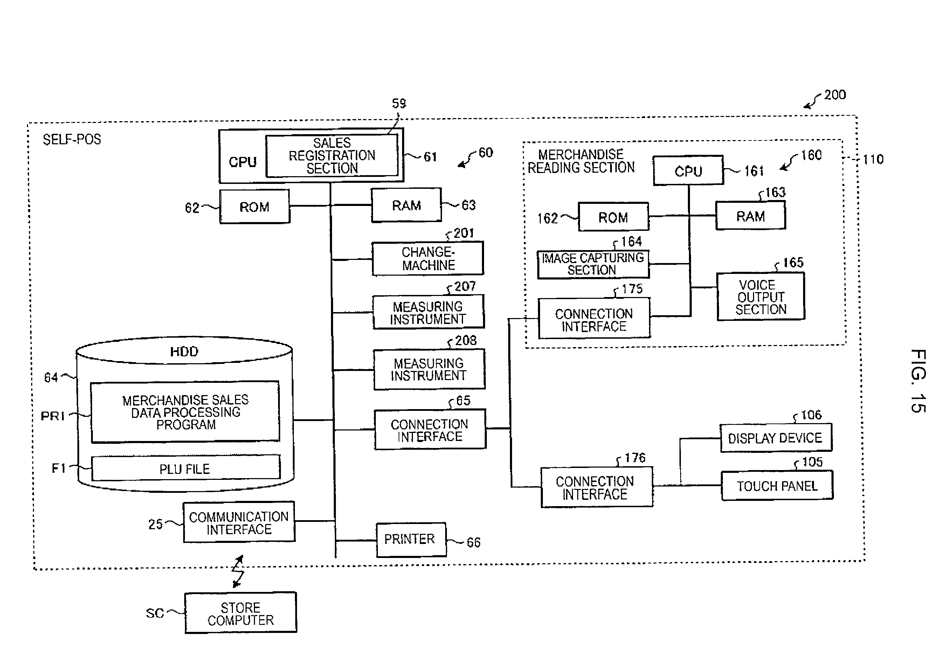

Here, FIG. 14 is an external perspective view illustrating a configuration of a self-POS 200. FIG. 15 is a block diagram illustrating a hardware configuration of the self-POS 200. In the following description, the same reference numerals are applied to the similar elements illustrated in FIGS. 1 and 2, and description thereof will be omitted. As illustrated in FIGS. 14 and 15, a body 202 of the self-POS 200 includes a first display device 106 where a touch panel 105 is disposed on a surface thereof or a merchandise reading section 110 that reads the merchandise image for recognizing (detecting) the type of the merchandise.

As the first display device 106, for example, a liquid crystal display is used. The first display device 106 displays a guide screen for indicating a method of operating the self-POS 200 to a customer, various input screens, a registration screen for displaying the merchandise information read by the merchandise reading section 110, a settlement screen for displaying a total amount, a deposit amount, a change amount to the merchandise, and the like, or selecting a payment method.

The merchandise reading section 110 is configured such that the customer holds the code symbol attached to the merchandise over the reading window 103 of the merchandise reading section 110. Thus, the merchandise image is read by the image capturing section 164.

Furthermore, a merchandise placing table 203 for placing unsettled merchandise in a basket is provided at the right side of the body 202. A merchandise placing table 204 for placing settled merchandise is provided at the left side of the body 202. The merchandise placing table 204 is provided with a bag hook 205 for hanging a bag into which the settled merchandise is put and a temporary placing table 206 for temporarily placing the settled merchandise before the settled merchandise is put into the bag. In the merchandise placing tables 203 and 204, measuring instruments 207 and 208 are respectively provided and have a function for confirming that a weight of the merchandise before and after settlement are the same as each other.

Furthermore, the body 202 of the self-POS 200 is provided with a change-machine 201 for performing deposit of bills for settlement or reception of change bills.

If the self-POS 200 having such a configuration is applied to the checkout system 1, the self-POS 200 functions as the information processing apparatus.

The programs executed by each apparatus of the embodiments described above or the modification examples are provided by being pre-assembled in a storage medium (ROM or storage section) included in each apparatus, but are not limited to those. For example, the programs may be configured to be provided by being recorded on a computer readable recording medium such as a CD-ROM, a flexible disk (FD), a CD-R, a Digital Versatile Disc (DVD) with an installable format or executable format file. Furthermore, the recording medium is not limited to a medium independent of a computer or an integrated system, and also includes a recording medium in which the programs transmitted by a LAN, the Internet, and the like are stored or temporarily stored by downloading the programs.

In addition, a configuration in which the programs executed in each apparatus of the embodiments described above or the modification examples are provided by being stored in the computer connected to a network such as the Internet and being downloaded via the network. Otherwise, the programs may be configured so as to be provided or distributed via the network such as the Internet.

## Claims

1. An information processing apparatus comprising:
an image capturing module configured to capture an image of an object held over an image capturing section;
a first recognition module configured to compare a feature amount of the object captured by the image capturing module with a feature amount for collation of each merchandise registered in a dictionary in advance to recognize merchandise to be a candidate of the object from each merchandise based on a similarity degree;
an input module configured to receive an input selecting a merchandise corresponding to the object from the merchandise candidates;
a second recognition module configured to detect a code symbol attached to the object from the image captured by the image capturing module to recognize the merchandise corresponding to the object based on the code symbol;
a control module configured to operate the first recognition module and the second recognition module in parallel; and
a registration module configured to register the merchandise for which the selecting input is received by the input module or the merchandise which is recognized by the second recognition module.

2. The apparatus according to claim 1,
wherein the control module suppresses a processing of the first recognition module if the second recognition module recognizes the merchandise in the parallel processing.

3. The apparatus according to claim 1 or 2, further comprising:
a display control module configured to display a screen including a first operation unit for performing a merchandise registration method with the first recognition module and the second recognition module, and a second operation unit for performing another merchandise registration method other than the merchandise registration method,
wherein the control module operates the first recognition module and the second recognition module in parallel if the first operation unit is operated.

4. The apparatus according to any one of claims 1 to 3, wherein the registration module informs a registration of the merchandise if the merchandise recognized by the second recognition module is registered as the sales target.

5. The apparatus according to claim 3 or 4,
wherein the display control module displays a merchandise list screen for selecting the merchandise therefrom if the second operation unit is operated and the registration module registers the merchandise selected through the merchandise list screen.

6. A program for causing a computer to function as an information processing apparatus according to any one of claims 1 to 5.

7. An information processing method, including:
capturing an image of an object;
first recognition step comprising comparing a feature amount of the object with a feature amount for collation of each merchandise registered in a dictionary in advance and recognizing merchandise to be a candidate of the object from each merchandise based on a similarity degree;
receiving an input selecting the merchandise corresponding to the object from the merchandise candidates;
second recognition step comprising detecting a code symbol attached to the object from the image captured and recognizing the merchandise corresponding to the object based on the code symbol;
performing the first recognition step and the second recognition step in parallel; and
registering the merchandise for which the selecting input is received by the input module or the merchandise which is recognized at the second recognition step as a sales target.

8. The method according to claim 7, wherein if merchandise is recognized at the second recognition step performed in parallel, the first recognition step is stopped.

9. The method according to claim 7 or 8, further comprising:
display controlling step to display a screen including a first operation unit for performing a merchandise registration method at the first recognition step and the second recognition step, and a second operation unit for performing another merchandise registration method other than the merchandise registration method,
wherein the first recognition step and the second recognition step are performed in parallel if the first operation unit is operated.

10. The method according to any one of claims 7 to 9, further comprising informing a registration of the merchandise if the merchandise recognized by the second recognition step is registered as the sales target.

11. The apparatus according to claim 9 or 10,
wherein the display control step comprises displaying a merchandise list screen for selecting the merchandise therefrom if the second operation unit is operated and the merchandise selected through the merchandise list screen is registered.
